# EUROPÄISCHE PATENTSCHRIFT

(11) **EP 2 404 847 B1**
(45) Veröffentlichungstag und Bekanntmachung des Hinweises auf die Patenterteilung: **11.09.2013**
(21) Anmeldenummer: 11005245.3
(22) Anmeldetag: 28.06.2011
(51) Int. Cl.: B65G 1/04

(54) **Wagen zum Transport von Paletten innerhalb eines Tiefen-Regalsystems**
Cart for transporting palettes within a deep shelf system
Chariot de transport de palettes dans le cadre d'un système de rayonnages profonds

(30) Priorität: 07.07.2010 DE 102010026885
(43) Veröffentlichungstag der Anmeldung: 11.01.2012
(73) Patentinhaber: Jungheinrich Aktiengesellschaft, 22047 Hamburg (DE)
(72) Erfinder: Badura, Klaus-Peter, 21357 Barum (DE); Baumgärtel, Steven, 22083 Hamburg (DE); Krämer, Beat, 21075 Hamburg (DE)
(74) Vertreter: Hauck Patent- und Rechtsanwälte

(56) Entgegenhaltungen:
- WO-A1-2009/132730
- DE-A1- 4 330 795

## Beschreibung

Die vorliegende Erfindung betrifft einen Wagen zum Transport von Paletten innerhalb eines Tiefen-Regalsystems nach dem Oberbegriff des Anspruchs 1, wie er aus der DE 4 330 795 A1 bekannt ist. Solche Wagen werden in der Fachsprache auch als UPC (Under Palet Carrier) bezeichnet. Es handelt sich hierbei um schienengebundene Kanalfahrwagen für Tiefen-Regalsysteme (Drive-In-Systeme), bei denen mehrere Paletten in der Tiefe des Regals hintereinander gestapelt sind. Der Wagen verfährt die Paletten und nimmt diese durch ein senkrechtes Ausfahren der Hubplattform auf, um so die Paletten innerhalb des Regalsystems zu transportieren.

Aus EP 2008 950 A1 ist ein Wagen zum Transport von Paletten innerhalb eines Tiefen-Regalsystems bekannt. Der Wagen besitzt auf seiner zur Palette weisenden Oberseite zwei parallel zueinander verlaufende Hubabschnitte, die über einen Hubmechanismus anhebbar sind. Der Hubmechanismus besitzt einen Elektromotor, der über einen Zahnriemen eine Hubwelle antreibt. Die Hubwelle greift an ihren beiden Enden über eine Hubstange an einen ersten Umlenkhebel an, der über eine Druckstange mit einem zweiten Umlenkhebel verbunden ist. Durch Betätigung der Hubwelle werden die Umlenkhebel betätigt und heben die Hubabschnitte jeweils an.

Aus WO 2004/039701 ist ein Wagen zum Transport von Paletten innerhalb eines Tiefen-Regalsystems bekannt. Zum Anheben der Paletten werden die Räder, mit denen der Wagen in dem Kanal fährt, nach unten stellt, so dass der Fahrzeugkörper insgesamt angehoben wird. Das Verstellen der Räder nach unten erfolgt über ein Knie-Hebelgetriebe.

Aus EP 0 197 448 ist ein Wagen zum Transport von Paletten innerhalb eines Tiefen-Regalsystems bekannt, bei dem eine Hubplattform über vier in den Ecken des Fahrzeugs angeordnete hydraulische Zylinder angehoben wird.

Aus DE 32 13 983 A1 ist eine Vorrichtung zum Handhaben von Transport- bzw. Lagereinheiten in Hochregal-Blocklager-Systemen bekannt. Die Vorrichtung besitzt ein schienengebundenes Fahrzeug mit Laufrädern, dessen Hubplattform zum Anheben in Längsrichtung des Fahrzeugs entlang einer Kulisse verfahrbar ist.

Aus WO 2009/1 32 730 A1 ist ein Wagen zum Transport von Lasten in einem Tiefen-Regalsystem bekannt, bei dem ein Schwenkarmmechanismus jeweils seitlich am Fahrgestell gelagert ist und der von jeweils zwei Servomotoren bewegt wird. Eine Lastenplattform wird angehoben, indem sich die Servomotoren an einer Antriebskette entlang ziehen und so den Schwenkarmmechanismus betätigen.

Aus DE 43 30 795 Alist ein mobiles Lastaufnahmemittel bekannt, das zwei Hubflächen aufweist, die über einen Hebelmechanismus angehoben werden. In Fahrtrichtung ist auf jeder Seite des Wagens ein vorderer und ein hinterer Hebel über eine Verbindungsstange miteinander verbunden. Jeweils eine Kurbelstange ist mit den hinteren Hebeln verbunden. Die Kurbelstangen werden durch eine gemeinsame Welle angetrieben und bewirken so ein synchrones Heben und Senken der Hubflächen. Die gemeinsame Welle wird dabei von einem Elektromotor angetrieben.

Der Erfindung liegt die Aufgabe zugrunde, einen Wagen zum Transport von Paletten innerhalb eines Tiefen-Regalsystems bereitzustellen, dessen Hubeinrichtung mit einfachen Mitteln ein gleichmäßiges Anheben der Last sicherstellt.

Erfindungsgemäß wird die Aufgabe durch einen Wagen mit den Merkmalen aus Anspruch 1 gelöst. Vorteilhafte Ausgestaltungen bilden den Gegenstand der Unteransprüche.

Der erfindungsgemäße Wagen dient zum Transport von Paletten innerhalb eines Tiefen-Regalsystems. Der Wagen kann statt Paletten auch andere Lasten aufnehmen und innerhalb des Tiefen-Regalsystems transportieren. Der erfindungsgemäße Wagen besitzt einen Fahrzeugkörper mit mindestens vier Rädern, von denen mindestens ein Paar durch einen am Fahrzeugkörper angeordneten Fahrantrieb antreibbar ist. Mit Hilfe der Räder kann der Wagen innerhalb eines Kanals des Tiefen-Regalsystems verfahren werden, um Paletten zu transportieren. Die Räder des Wagens laufen auf Schienen die in dem Tiefen-Regalsystem vorgesehen sind, wobei die Paletten auf Lasttragabschnitten aufliegen, so dass die Schienen für ein Unterfahren der Paletten frei bleiben. Der Fahrzeugkörper weist an seiner Oberseite eine Hubplattform auf, die über eine Hubeinrichtung anhebbar ist. Zum Aufnehmen einer Palette fährt der Wagen unter die Palette und hebt diese mit Hilfe der Hubplattform an. Erfindungsgemäß weist die Hubeinrichtung zwei Hubzylinder auf, die jeweils mit einem Hebel und zwei Kurvenscheiben zusammenwirken. Die Kurvenscheiben sind erfindungsgemäß schwenkbar an dem Fahrzeugkörper gelagert und paarweise über einen Hebel derart miteinander verbunden, dass bei einer Betätigung eines der Hubzylinder zwei der Kurvenscheiben in eine die Hubplattform anhebende Position gestellt werden. Die erfindungsgemäße Hubeinrichtung besitzt zwei Hubzylinder, die die insgesamt vier Kurvenscheiben beim Anheben der Hubplattform in eine angehobene Position stellen können. Durch die Verwendung von zwei Hubzylindern und jeweils paarweise über einen Hebel miteinander verbundenen Kurvenscheiben kann ein gleichmäßiges Anheben der Hubplattform sichergestellt werden.

In einer bevorzugten Ausführung ist jeder Hubzylinder schwenkbar mit einer ersten Kurvenscheibe verbunden. Die direkte Anbindung des Hubzylinders an die Kurvenscheiben stellt sicher, dass die Kraft aus dem Hubzylinder direkt in die erste Kurvenscheibe eingeleitet wird und so ein direktes Anheben der Hubplattform über die ersten Kurvenscheibe erfolgen kann.

In einem weiteren bevorzugten Ausführungsbeispiel ist der die Kurvenscheiben verbindende Hebel schwenkbar mit der ersten Kurvenscheibe verbunden, wobei die Schwenkachse der Verbindung von Hebel und erster Kurvenscheibe mit der Schwenkachse der Verbindung von Hubzylinder und erster Kurvenscheibe oder Hebel zusammenfällt. Auf diese Weise wird sichergestellt, dass die vom Hubzylinder eingeleitete Kraft über den Hebel in die zweite Kurvenscheibe geleitet wird, ohne dass die erste Kurvenscheibe und ihr Lager am Fahrzeugkörper die Kraft für die zweite Kurvenscheibe aufnehmen muss. Hierdurch wird sichergestellt, dass die erste und die zweite Kurvenscheibe, die über einen Hebel miteinander verbunden sind, gleichmäßig die Hubplattform anheben können.

In einer alternativen Ausgestaltung des Hebels besteht dieser aus einem ersten und einem zweiten Hebelabschnitt, die über zwei Distanzblöcke miteinander verbunden sind. Bevorzugt greift der Hubzylinder zwischen den Distanzblöcken an den Hebelabschnitten an.

Bei dieser zweiten Ausgestaltung der Hubeinrichtung ist bevorzugt der erste Hebelabschnitt schwenkbar mit der ersten Kurvenscheibe verbunden. Entsprechend ist der zweite Hebelabschnitt mit der zweiten Kurvenscheibe verbunden, wobei der erste und der zweite Hebelabschnitt auf der gegenüberliegenden Seite des Hubzylinders angeordnet sind. Bevorzugt greift der Hubzylinder ungefähr in der Mitte zwischen den Kurvenscheiben an, sodass eine Krafteinleitung gleichmäßig in die erste und die zweite Kurvenscheibe erfolgt.

Bei dem erfindungsgemäßen Hubwagen weist jeder Hubzylinder bevorzugt ein Schubrohr mit einem ausfahrbaren Zylinder auf. Bevorzugt wird der Zylinder über einen Elektromotor angetrieben, wobei die beiden Elektromotoren der Hubzylinder gemeinsam angesteuert werden. Insbesondere durch die Krafteinleitung in die Kurvenscheiben kann ein gleichmäßiges Anheben der Hubplattform erreicht werden. Für das gleichmäßige Anheben ist es ausreichend, dass die Elektromotoren gemeinsam angesteuert werden. Als Elektromotoren können permanent erregte Gleichstrommotoren eingesetzt werden. Je nach Anforderung können auch fremderregte Gleichstrommotoren, Synchron- und Asynchron-Wechselstrommotoren oder bürstenlose Gleichstrommotoren eingesetzt werden.

In einer bevorzugten Ausgestaltung besitzt die Hubplattform auf ihrer zum Fahrzeug weisenden Seite vier Lastrollen, die jeweils auf einer der Kurvenscheiben aufliegen. Durch das Verstellen der Kurvenscheiben rollen die Lastrollen auf diesen während des Anhebevorgangs ab. Die Kräfte an der Hubplattform, die in Längs- oder Querrichtung des Fahrzeugkörpers wirken, werden durch das Abrollen der Lastrollen vermieden.

In einer bevorzugten Ausgestaltung ist mindestens eine Führungseinrichtung für die Hubplattform gegenüber dem Fahrzeugkörper vorgesehen, die einen Führungsbolzen und eine Führungsbuchse für den Führungsbolzen aufweist, wobei bei dem Anheben der Hubplattform der Führungsbolzen in der Führungsbuchse geführt ist. Die Führungseinrichtung stellt sicher, dass die Hubplattform beim Anheben über die Kurvenscheiben sich nicht in Längs- oder Querrichtung bewegt, sondern senkrecht angehoben wird.

Die vorliegende Erfindung wird nachfolgend anhand eines Ausführungsbeispiels näher erläutert. Es zeigt:
- Fig. 1: den Fahrzeugkörper mit der Hubeinrichtung in einer ersten Ausgestaltung ohne die Hubplattform in einer perspektivischen Ansicht,
- Fig. 2: die beiden Hubeinrichtungen aus Figur 1 ohne Fahrzeugkörper mit Hubplattform in einer perspektivischen Darstellung von unten,
- Fig. 3: die Hubeinrichtung in der ersten Ausgestaltung in einer Ansicht von oben,
- Fig. 4: die Hubeinrichtung in der ersten Ausgestaltung mit Kurvenscheiben und Hebel in einer auseinandergezogenen perspektivischen Ansicht,
- Fig. 5: einen Ausschnitt des Fahrzeugkörpers mit aufgesetzter Hubplattform in einer teilweise durchbrochenen Darstellung, die die erste Hubeinrichtung zeigt,
- Fig. 6: eine zweite Ausgestaltung der Hubeinrichtung in einer perspektivischen Darstellung bei teilweise durchbrochen dargestellter Hubplattform,
- Fig. 7: einen Fahrzeugkörper mit der zweiten Ausgestaltung der Hubeinrichtung in einer perspektivischen Ansicht,
- Fig. 8: eine Darstellung der zweiten Ausgestaltung der Hubeinrichtung unterhalb der Hubplattform ohne Fahrzeugkörper in einer perspektivischen Ansicht,
- Fig. 9: die zweite Ausgestaltung der Hubeinrichtung in einer Draufsicht und
- Fig. 10: die Hubeinrichtung in der zweiten Ausgestaltung in einer perspektivischen, auseinandergezogenen Ansicht.

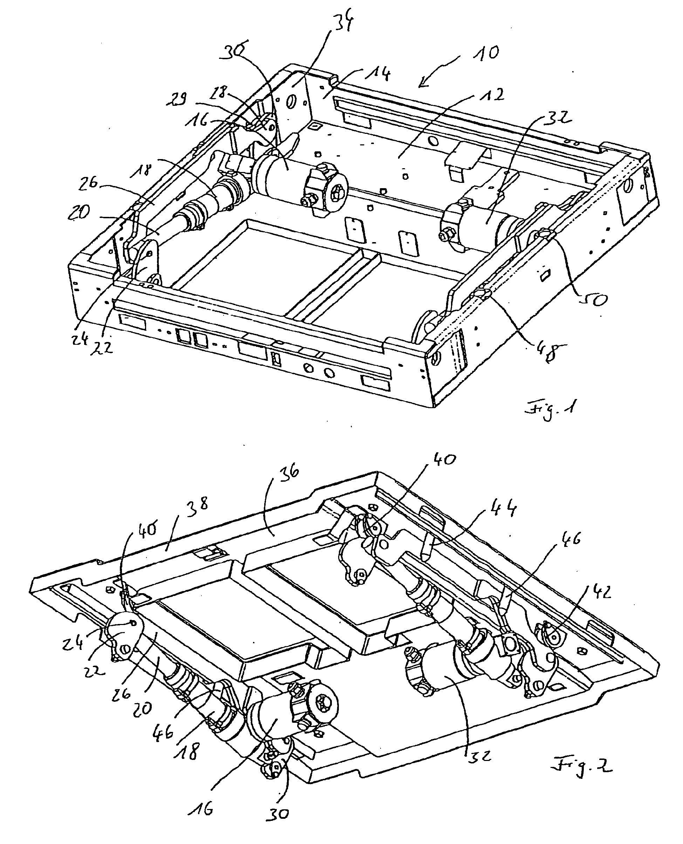

Fig. 1 zeigt einen Fahrzeugkörper 10 des erfindungsgemäßen Wagens mit einer ersten Ausgestaltung der Hubeinrichtung. Der Fahrzeugkörper 10 besitzt eine Grundplatte 12 und eine diese umgebende Seitenwand 14. Die Seitenwand 14 kann hierbei ein- oder mehrstückig ausgebildet sein. Der Fahrzeugkörper 10 beinhaltet die Batterien für die elektrische Versorgung der Antriebe (nicht dargestellt), einen Fahrantrieb (nicht dargestellt) und weitere Bauteile für die Steuerung des Fahrzeugs. Zudem ist das Fahrzeug mit Sensoren ausgestattet, um optisch zu erkennen, ob das Fahrzeug sich in der richtigen Position unter der Palette befindet, um diese anzuheben. Zur besseren Übersicht zeigen die Figuren lediglich die Hubeinrichtung in dem Fahrzeug.

Die Hubeinrichtung besteht aus einem Gleichstrommotor 16, der senkrecht zu einem Schubrohr 18 angeordnet ist. Der Gleichstrommotor 16 ist ein 24V permanent erregter Gleichstrommotor, der über ein Getriebe eine Kugelumlaufspindel im Inneren des Schubrohres 18 antreibt. Eine Spindel (nicht dargestellt) ist im Schubrohr 18 gelagert und führt eine Rotationsbewegung aus. Der ausfahrbare Zylinder 20 ist über ein Innengewinde mit der Spindel gekoppelt. Durch die Rotationsbewegung der Kugelumlaufspindel wird der Zylinder 20 ein- und ausgefahren.

Der Zylinder 20 ist an seinem freien Ende mit einer ersten Kurvenscheibe 22 über einen Bolzen 24 schwenkbar verbunden. Ein Hebel 26 ist mit einem Ende ebenfalls über den Bolzen 24 mit dem freien Ende des Zylinders 20 schwenkbar verbunden. Der Hebel 26 erstreckt sich im Wesentlichen flach in den Fahrzeugkörper 10. Das zweite Ende des Hebels 26 ist über Laschen 28, 29 mit einer zweiten Kurvenscheibe 30 schwenkbar verbunden.

Der Fahrzeugkörper 10 weist eine zweite Hubeinrichtung mit einem Gleichstrommotor 32 auf, die entsprechend an der anderen Seite des Fahrzeugkörpers 10 angeordnet ist. Die zweite Hubeinrichtung ist gleich der vorstehend beschriebenen ersten Hubeinrichtung aufgebaut. In Bezug auf den Fahrzeugkörper ist der Hebel 26 parallel zur Seitenwand 34 des Fahrzeugkörpers angeordnet und wird auch parallel zu dieser verstellt.

Fig. 2 zeigt die beiden Hubeinrichtungen ohne Fahrzeugkörper in ihrem Zusammenwirken mit einer Hubplattform 36. Die Hubplattform 36 besitzt eine Grundplatte 38, die den Fahrzeugkörper 10 abdeckt. Zur Abdichtung des Fahrzeugkörpers besitzt die Hubplattform 36 einen umlaufenden Rand , der außen über den Fahrzeugkörper 10 übersteht. Obwohl die Hubeinrichtungen fest mit dem Fahrzeugkörper 10 verbunden sind, sind diese zur Verdeutlichung in der Darstellung aus Fig. 2 losgelöst vom Fahrzeugkörper dargestellt und in einer perspektivischen Ansicht von unten erkennbar. Der Gleichstrommotor 16 treibt den in dem Schubrohr 18 gelagerten Zylinder 20 an, der über den Bolzen 24 mit der ersten Kurvenscheibe 22 schwenkbar verbunden ist. Die zweite Kurvenscheibe 30 ist in der Darstellung aus Fig. 2 teilweise durch das Ende des Schubrohres verdeckt. Der die erste Kurvenscheiben 22 und 30 verbindende Hebel 26 ist oberhalb des Zylinders 20 und des Schubrohrs 18 erkennbar.

Die Hubplattform 36 besitzt auf ihrer zum Fahrzeugkörper 10 weisende Seite Lastrollen 40 und 42. In der Darstellung aus Fig. 2 ist an der hinteren Hubeinrichtung die Lastrolle 42 durch den Motor 16 verdeckt. An der vorderen Hubeinrichtung sind jedoch beide Lastrollen 40 und 42 zu erkennen. Die vordere Lastrolle 40 rollt auf der ersten Kurvenscheibe 22 ab. Die hintere Lastrolle 42 rollt auf der zweiten Kurvenscheibe 30 ab. Insgesamt sind vier Lastrollen für die vier Kurvenscheiben vorgesehen.

Als Führungseinrichtung ist die Hubplattform 36 mit insgesamt vier Bolzen 44, 46 ausgestattet. Die Bolzen 44, 46 stehen jeweils seitlich in Längsrichtung des Wagens senkrecht von der Hubplattform 36 nach unten in das Innere des Fahrzeugkörpers 10 vor. Der Fahrzeugkörper 10 besitzt an seiner Seitenwand 34 entsprechende Führungsbuchsen 48 und 50, die im aufgesetzten Zustand der Hubplattform 36 die Führungsbolzen 44 und 46 aufnehmen.

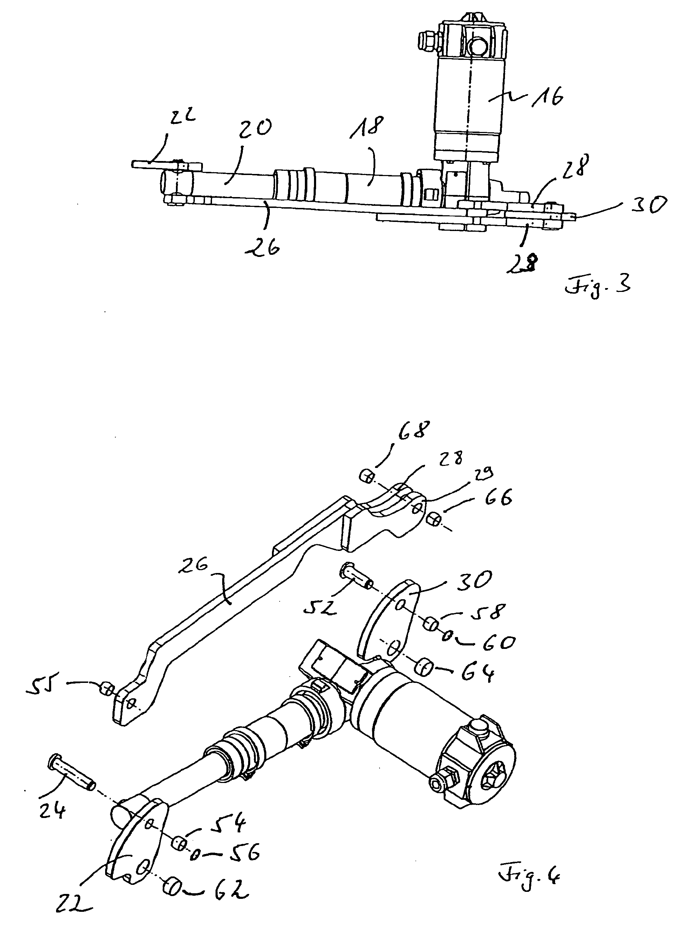

Fig. 3 zeigt eine Hubeinrichtung mit einem Elektromotor 16, einem Schubrohr 18 und dem Zylinder 20 in einer Ansicht von oben. Der Zylinder 20 ist an seinem freien Ende mit der ersten Kurvenscheibe 24 schwenkbar verbunden. Der Hebel 26 ist an einem Ende ebenfalls schwenkbar durch ein Ende des Zylinders 20 verbunden. Das andere Ende des Hebels 26 besitzt zwei Laschen 28 und 29, die auf beiden Seiten der Kurvenscheibe 30 angeordnet sind und ebenfalls schwenkbar mit dieser verbunden sind.

Die perspektivisch auseinandergezogene Darstellung in Fig. 4 zeigt die drehbare Bolzenverbindung des Hebels 26 mit dem freien Ende des Zylinders 20 und der ersten Kurvenscheibe ebenso wie die drehbare Bolzenverbindung des Hebels 26 und seiner Laschen 28 und 29 mit der zweiten Kurvenscheibe 30. Die Bolzenverbindung an der ersten Kurvenscheibe 22 besitzt einen Bolzen 24, der im montierten Zustand durch eine Bohrung in dem Hebel 26 und eine Bohrung in der Kurvenscheibe 22 geführt ist. Für eine wartungsfreie und reibungsarme Schwenkbewegung sind Buchsen 54 und 55 vorgesehen, in denen sich der Bolzen 24 dreht. Zur Sicherung des Bolzens ist eine Mutter 56 vorgesehen.

An dem gegenüberliegenden Ende des Hebels 26 sind ebenfalls Buchsen 66 und 68 in den Laschen 28 und 29 des Hebels 26 vorgesehen, durch die ein Bolzen 52 geführt ist. Eine weitere Buchse 58 stellt sicher, dass der Bolzen 52 sich reibungsarm in der Kurvenscheibe 30 drehen kann. Der Bolzen 52 ist über einen Ring 60 gesichert. Die Kurvenscheiben selbst sind ebenfalls über Bolzen (nicht dargestellt) mit dem Fahrzeugkörper 10 schwenkbar verbunden. Auch hier sind Buchsen 62 und 64 vorgesehen, um die Kurvenscheiben 22 bzw. 30 reibungsarm zu lagern. Durch die Anordnung der Kurvenscheiben auf der motornahen und der motorfernen Seite des Zylinders 20 wird ein querstellendes Drehmoment auf den Zylinder vermieden.

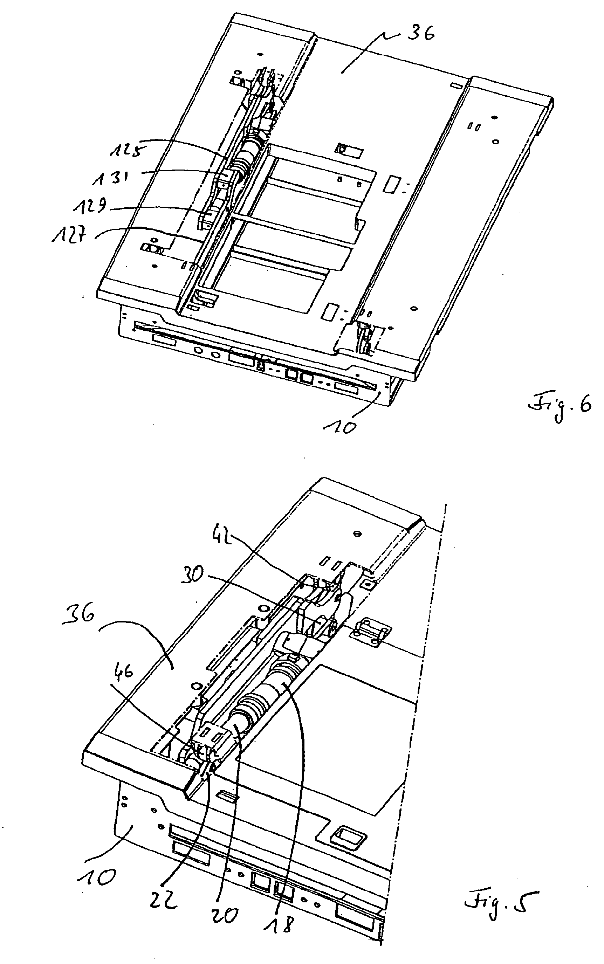

Fig. 5 zeigt den zusammengebauten Zustand, in dem die Hubplattform 36 auf den Fahrzeugkörper 10 aufgesetzt ist. Die Hubplattform 36 ist teilweise durchbrochen dargestellt und gibt den Blick auf das Schubrohr 18 und den Zylinder 20 frei. Deutlich zu erkennen ist, dass das Lastrad 42 auf der Kurvenscheibe 30 abrollt und das Lastrad 40 auf der Kurvenscheibe 22.

Im Betrieb wird durch den Elektromotor 16 die Spindel 20 ausgefahren. Die Spindel 20 dreht die erste Kurvenscheibe 22 und über den Hebel 26 die Kurvenscheibe 30 in eine angehobene Position. Durch die angehobenen Kurvenscheiben 22 und 30 wird über die Lastrollen 40 und 42 die Hubplattform 36 angehoben. Die Führungsbolzen 44 und 46 gleiten beim Anheben in den Führungsbuchsen 48 und 50 und stellen sicher, dass sich die Hubplattform 36 nicht in Längs- oder Querrichtung gegenüber dem Fahrzeugkörper 10 verschiebt, sondern lediglich senkrecht angehoben wird.

Neben der vorstehend beschriebenen Ausgestaltung einer Hubeinrichtung mit einem einstückigen Hebel 26, der an der ersten Kurvenscheibe 22 angreift, ist auch eine Ausgestaltung der Hubeinrichtung vorgesehen, bei der der die Kurvenscheibe verbindende Hebel aus zwei Hebelabschnitten besteht. Die zweite Ausgestaltung unterscheidet sich im Wesentlichen durch die äußeren Abmessungen und die dadurch bedingte andere Anordnung der Bauteile in dem Fahrzeug. Die erstbeschriebene Ausgestaltung ist für Euro-Paletten ausgelegt, bei denen die Ringabmessungen der Euro-Paletten es notwendig machen, mit dem Hubzylinder direkt an der ersten Kurvenscheibe anzugreifen und über den Hebel die Verbindung zur zweiten Kurvenscheibe herzustellen.

Gegenüber einer Verwendung für Euro-Paletten kann für den Transport von Chemie-Paletten der Fahrzeugkörper 300 mm länger ausgebildet und um 110 mm schmaler ausgebildet werden. Aufgrund der größeren Länge der Hubplattform wird bei dieser Ausgestaltung, wie nachfolgend beschrieben wird, eine andere Form der Krafteinleitung gewählt.

Neben den Ausgestaltungen für Euro-Paletten und Chemie-Paletten sind noch weitere Palettenabmessungen üblich. Beispielsweise existieren noch Industrie-Paletten, die um 200 mm länger als Euro-Paletten sind. Auch an diese kann der Fahrzeugkörper entsprechend in seiner Länge angepasst werden.

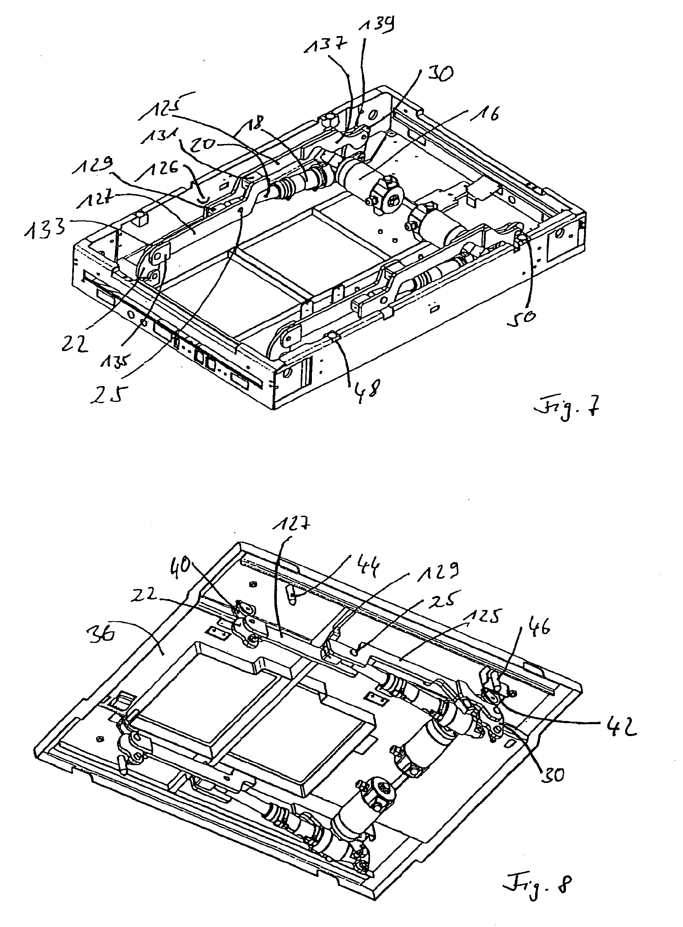

Fig. 7 zeigt eine zweite Ausgestaltung der Hubeinrichtung, bei der der elektrische Antrieb 16, das Schubrohr 18 und der Zylinder 20 gleich zu der Ausgestaltung in dem ersten Ausführungsbeispiel aufgebaut sind. Der Zylinder 20 greift mit seinem freien Ende an einer zweitteiligen Hebelkonstruktion 126 an. Der zweitteilige Hebel 126 besteht aus einem ersten Hebelabschnitt 127 und einem zweiten Hebelabschnitt 125. Die Hebelabschnitte sind über Distanzblöcke 129 und 131 miteinander verbunden. Die miteinander verbundenen Enden der Hebelabschnitten 125 und 127 besitzen einen gestreckten S-förmigen Verlauf, so dass der Hubzylinder 20 zwischen den Distanzblöcken 129 und 131 angreifen kann. Das freie Ende des Zylinders 20 ist über einen Bolzen 24 mit dem ersten Hebelabschnitt 127 und dem zweiten Hebelabschnitt 125 verbunden, wobei der Zylinder 20 zwischen den Hebelabschnitten angeordnet ist. Der erste Hebelabschnitt 127 besitzt an seinem Ende zwei Laschen 133 und 135, über die der erste Hebelabschnitt 127 mit der ersten Kurvenscheibe 22 verbunden ist. Der zweite Hebelabschnitt 125 besitzt ebenfalls zwei Laschen 137 und 139, über die der zweite Hebelabschnitt 125 mit der zweiten Kurvenscheibe 30 verbunden ist.

Fig. 8 zeigt eine Hubplattform 36 in einer perspektivischen Ansicht vom Fahrzeugkörper aus mit den beiden zugehörigen Hubeinrichtungen. Die Hubplattform besitzt insgesamt vier Lastrollen 40 und 42, die jeweils oberhalb der Kurvenscheiben 30 und 22 angeordnet sind. Für die Führung der Hubplattform 36 sind Führungsbolzen 44 und 46 vorgesehen, die in Führungsbuchsen 48 und 50 (vgl. Fig. 7) des Fahrzeugkörpers 10 geführt sind. Deutlich zu erkennen in Fig. 8 ist der Distanzblock 129, über die die beiden Hebelabschnitte 127 und 125 auf der vom Antrieb 16 fortweisenden Seite miteinander verbunden sind. Das freie Ende des Zylinders 20 ist über einen Bolzen 25 schwenkbar mit den Hebelabschnitten 127 und 125 verbunden.

Aufgrund des zweiteiligen Aufbaus des Hebels 126 mit seinen Hebelabschnitten 127 und 125 tritt die Situation auf, dass die beiden Kurvenscheiben auf unterschiedlichen Seiten des Zylinders 20 angeordnet sind.

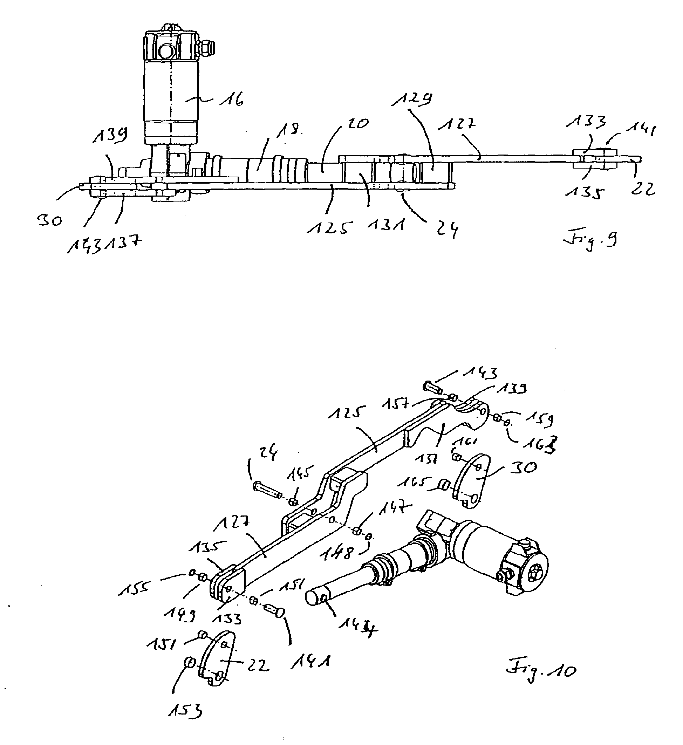

Fig. 9 zeigt den Aufbau der Hubeinrichtung in der zweiten Ausgestaltung in einer Draufsicht. Wie auch in der ersten Ausgestaltung treibt ein Gleichstrommotor 16 über ein Schubrohr 18 einen Zylinder 20 an. Das freie Ende des Zylinders 20 ist über einen Bolzen 25 mit den Hebelabschnitten 125 und 127 verbunden. Der Hebelabschnitt 127 ist motorseitig und der Hebelabschnitt 125 ist motorfern angeordnet. Die Hebelabschnitte 125 und 127 sind über Distanzblöcke 129 und 131 miteinander verbunden, wobei die Distanzblöcke 129 und 131 beabstandet voneinander angeordnet sind. Zwischen den Distanzblöcke 129 und 131 ist das freie Ende des Zylinders 20 über einen Bolzen 25 mit den Hebelabschnitten 125 und 127 schwenkbar verbunden. Der Hebelabschnitt 127 besitzt an seinem freien Ende zwei Laschen 133 und 135, die über eine schwenkbare Bolzenverbindung mit der ersten Kurvenscheibe 22 schwenkbar verbunden sind.

Fig. 10 zeigt die Hubeinrichtung der zweiten Ausgestaltung in einer auseinandergezogenen perspektivischen Darstellung. Der Zylinder 20 ist an seinem freien Ende mit einer Bohrung 144 versehen, durch die der Bolzen 24 geführt ist. Der Bolzen 24 ist über Buchsen 145, 147 reibungsarm und schwenkbar in den Hebelarmen 127 und 125 gelagert. Der Bolzen 24 ist durch einen Ring 148 gesichert. Die Verbindung des Hebelabschnitts 127 zu der Kurvenscheibe 22 erfolgt ebenfalls über einen Bolzen 141, der über zwei Hülsen 149 und 151 schwenkbar in den Laschen 133 und 135 gelagert ist. Die Kurvenscheibe 22 ist ebenfalls mit einer Buchse 153 zur schwenkbaren Lagerung des Bolzens 141 in der Kurvenscheibe 22 ausgestattet. Die Kurvenscheibe 22 selbst ist wiederum über eine Buchse 153 schwenkbar in dem Fahrzeugkörper gelagert.

Der Bolzen 141 ist durch die Laschen 133 und 135 sowie die erste Kurvenscheibe 22 geführt und über einen Ring 155 gesichert. Die Laschen 133 und 135 sind ebenso wie die Laschen 137 und 139 auf beiden Seiten der Kurvenscheibe angeordnet. Der Hebelabschnitt 125 ist an seinem Ende mit den Laschen 137 und 139 über einen Bolzen 143 mit der Kurvenscheibe 30 verbunden. Die Lagerung erfolgt über Buchsen 157 und 159 sowie eine Buchse 161 in der Kurvenscheibe 30. Gesichert wird der Bolzen 143 über einen Ring 163. Die Kurvenscheibe 30 ist über eine Buchse 165 schwenkbar mit dem Fahrzeugkörper verbunden.

Bei der Betätigung des Zylinders 20 wird über den Hebelabschnitt 127 eine Kraft auf die erste Kurvenscheibe 22 und über den Hebelabschnitt 125 eine Kraft auf die Kurvenscheibe 30 aufgebracht, wobei bei einem Anheben der Hebelabschnitt 127 auf Druck und der Hebelabschnitt 125 auf Zug belastet wird. Beim Absenken erfolgt die Belastung der Hebelabschnitte entsprechend umgekehrt. Durch die Anordnung der Hebelabschnitte 125 und 127 auf der motornahen und der motorfernen Seite des Zylinders wird insbesondere beim Anheben einer Last vermieden, dass ein querstellendes Drehmoment an der Hubeinrichtung auftritt.

Fig. 6 zeigt in einer perspektivischen Ansicht den zusammengebauten Wagen mit einer teilweise durchbrochen dargestellten Hubplattform 36. Durch die Hubplattform 36 ist der Blick auf die Hebelabschnitte 125 und 127 freigegeben, über die die Hubplattform angehoben wird.

## Patentansprüche

1. Wagen zum Transport von Paletten innerhalb eines Tiefen-Regalsystems, der einen Fahrzeugkörper (10) mit mindestens vier Rädern aufweist, von denen mindestens ein Paar durch einen Antrieb im Fahrzeugkörper antreibbar ist, wobei der Fahrzeugkörper (10) an seiner Oberseite eine Hubplattform (36) aufweist, die über eine Hubeinrichtung anhebbar ist, **dadurch gekennzeichnet, dass**
die Hubeinrichtung zwei Hubzylinder (20) aufweist, die jeweils mit einem Hebel (26; 126) und zwei Kurvenscheiben (22, 30) zusammenwirken, wobei die Kurvenscheiben (22, 30) schwenkbar an dem Fahrzeugkörper (10) gelagert und paarweise über den Hebel (26; 126) miteinander derart verbunden sind, dass bei der Betätigung eines der Hubzylinder (20) zwei der Kurvenscheiben (22, 30) in eine die Hubplattform (36) anhebende Position gestellt werden, jeder der Hubzylinder (20) jeweils schwenkbar mit einer ersten Kurvenscheibe (22) verbunden ist, wobei
der Hebel (26) schwenkbar mit der ersten Kurvenscheibe (22) verbunden ist, wobei die Schwenkachse der Verbindung von Hebel (26) und erster Kurvenscheibe (22) mit der Schwenkachse der Verbindung von Hubzylinder (20) und erster Kurvenscheibe (22) oder Hebel (26) zusammenfällt.

2. Wagen nach Anspruch 1, **dadurch gekennzeichnet, dass** der Hebel (126) einen ersten Hebelabschnitt (127) und einen zweiten Hebelabschnitt (125) aufweist, die über Distanzblöcke (129, 131) miteinander verbunden sind.

3. Wagen nach Anspruch 2, **dadurch gekennzeichnet, dass** der Hubzylinder (20) zwischen den Distanzblöcken (129, 131) mit den Hebelabschnitten (125, 127) verbunden ist.

4. Wagen nach Anspruch 2 oder 3, **dadurch gekennzeichnet, dass** der erste Hebelabschnitt (127) schwenkbar mit der ersten Kurvenscheibe (22) verbunden ist.

5. Wagen einem der Ansprüche 2 bis 4, **dadurch gekennzeichnet, dass** der zweite Hebelabschnitt (125) mit der zweiten Kurvenscheibe (30) schwenkbar verbunden ist, wobei der zweite Hebelabschnitt (125) auf der gegenüberliegenden Seite des Hubzylinders (20) zu dem ersten Hebelabschnitt (127) angeordnet ist.

6. Wagen nach einem der Ansprüche 1 bis 5, **dadurch gekennzeichnet, dass** jeder Hubzylinder ein Schubrohr (18) mit einem ausfahrbaren Zylinder aufweist.

7. Wagen nach Anspruch 6, **dadurch gekennzeichnet, dass** jeder Hubzylinder einen Elektromotor (16) aufweist, der den Zylinder antreibt, wobei die Elektromotoren der beiden Hubzylinder über eine gemeinsame Steuerung angesteuert werden.

8. Wagen nach einem der Ansprüche 1 bis 7, **dadurch gekennzeichnet, dass** die Hubplattform (36) auf ihrer zum Fahrzeugkörper weisenden Seite vier Lastrollen (40, 42) aufweist, die auf den Kurvenscheiben (22, 30) aufliegen.

9. Wagen nach einem der Ansprüche 1 bis 8, **dadurch gekennzeichnet, dass** mindestens eine Führungseinrichtung für die Hubplattform (36) gegenüber dem Fahrzeugkörper vorgesehen ist, die einen Führungsbolzen (44, 46) und eine Führungsbuchse (48, 50) für den Führungsbolzen aufweist, wobei beim Anheben der Hubplattform (36) jeweils einer der Führungsbolzen (44, 46) in einer der Führungsbuchsen (48, 50) geführt ist.

## Claims

1. Cart for transporting pallets within a deep shelf system, said cart comprising a vehicle body (10) having at least four wheels, at least one pair thereof being able to be driven by a drive unit in the vehicle body, the vehicle body (10) having on its upper face a lifting platform (36) which may be lifted via a lifting device, **characterised in that** the lifting device has two lifting cylinders (20) which in each case cooperate with a lever (26; 126) and two cam discs (22, 30), the cam discs (22, 30) being pivotably mounted on the vehicle body (10) and being connected together in pairs via the lever (26; 126), such that when one of the lifting cylinders (20) is actuated two of the cam discs (22, 30) are set in a position in which the lifting platform (36) is lifted, each of the lifting cylinders (20) being pivotably connected in each case to a first cam disc (22), the lever (26) being pivotably connected to the first cam disc (22), the pivot axis of the connection of the lever (26) and the first cam disc (22) coinciding with the pivot axis of the connection of the lifting cylinder (20) and the first cam disc (22) or lever (26).

2. Cart according to Claim 1, **characterised in that** the lever (126) has a first lever portion (127) and a second lever portion (125), which are connected together via spacer blocks (129, 131).

3. Cart according to Claim 2, **characterised in that** the lifting cylinder (20) is connected to the lever portions (125, 127) between the spacer blocks (129, 131).

4. Cart according to Claim 2 or 3, **characterised in that** the first lever portion (127) is pivotably connected to the first cam disc (22).

5. Cart according to one of Claims 2 to 4, **characterised in that** the second lever portion (125) is pivotably connected to the second cam disc (30), the second lever portion (125) being arranged on the opposing side of the lifting cylinder (20) relative to the first lever portion (127).

6. Cart according to one of Claims 1 to 5, **characterised in that** each lifting cylinder has a thrust tube (18) with an extendable cylinder.

7. Cart according to Claim 6, **characterised in that** each lifting cylinder has an electric motor (16) which drives the cylinder, the electric motors of the two lifting cylinders being controlled via a common control unit.

8. Cart according to one of Claims 1 to 7, **characterised in that** the lifting platform (36) on its side facing the vehicle body has four load rollers (40, 42) which bear against the cam discs (22, 30).

9. Cart according to one of Claims 1 to 8, **characterised in that** at least one guide device is provided for the lifting platform (36) opposite the vehicle body, said guide device having a guide pin (44, 46) and a guide bushing (48, 50) for the guide pin, in each case one of the guide pins (44, 46) being guided in one of the guide bushings (48, 50) when the lifting platform (36) is lifted.

## Revendications

1. Chariot pour le transport de palettes dans le cadre d'un système de rayonnages profonds, qui présente un corps de véhicule (10) avec au moins quatre roues, dont au moins une paire peut être entraînée par un entraînement dans le corps de véhicule, le corps de véhicule (10) présentant sur son côté supérieur une plateforme de levage (36) qui peut être levée par le biais d'un dispositif de levage, **caractérisé en ce que**
le dispositif de levage présente deux cylindres de levage (20) qui coopèrent respectivement avec un levier (26 ; 126) et deux cames (22, 30), les cames (22, 30) étant supportées de façon pivotante sur le corps de véhicule (10) et étant raccordées entre elles par paires par le biais du levier (26 ; 126) de telle sorte que, lors de l'actionnement de l'un des cylindres de levage (20), deux des cames (22, 30) sont placées dans une position levant la plateforme de levage (36), chacun des cylindres de levage (20) étant raccordé respectivement de façon pivotante à une première came (22),
le levier (26) étant raccordé de façon pivotante à la première came (22), l'axe de pivotement du raccordement du levier (26) et de la première came (22) coïncidant avec l'axe de pivotement du raccordement du cylindre de levage (20) et de la première came (22) ou du levier (26).

2. Chariot selon la revendication 1, **caractérisé en ce que** le levier (126) présente un premier tronçon de levier (127) et un deuxième tronçon de levier (125) qui sont raccordés l'un à l'autre par le biais de blocs d'espacement (129, 131).

3. Chariot selon la revendication 2, **caractérisé en ce que** le cylindre de levage (20) est raccordé aux tronçons de levier (125, 127) entre les blocs d'espacement (129, 131).

4. Chariot selon la revendication 2 ou 3, **caractérisé en ce que** le premier tronçon de levier (127) est raccordé de façon pivotante à la première came (22).

5. Chariot selon une des revendications 2 à 4, **caractérisé en ce que** le deuxième tronçon de levier (125) est raccordé de façon pivotante à la deuxième came (30), le deuxième tronçon de levier (125) étant disposé sur le côté opposé du cylindre de levage (20) par rapport au premier tronçon de levier (127).

6. Chariot selon une des revendications 1 à 5, **caractérisé en ce que** chaque cylindre de levage présente un tube de poussée (18) avec un cylindre qui peut se déployer.

7. Chariot selon la revendication 6, **caractérisé en ce que** chaque cylindre de levage présente un moteur électrique (16) qui entraîne le cylindre, les moteurs électriques des deux cylindres de levage étant pilotés par le biais d'une commande commune.

8. Chariot selon une des revendications 1 à 7, **caractérisé en ce que** la plateforme de levage (36) présente, sur son côté tourné vers le corps de véhicule, quatre rouleaux de charge (40, 42) qui reposent sur les cames (22, 30).

9. Chariot selon une des revendications 1 à 8, **caractérisé en ce qu'**il est prévu au moins un dispositif de guidage pour la plateforme de levage (36) par rapport au corps de véhicule qui présente une broche de guidage (44, 46) et une douille de guidage (48, 50) pour la broche de guidage, une des broches de guidage (44, 46) étant respectivement guidée dans une des douilles de guidage (48, 50) lors du levage de la plateforme de levage (36).
